# NEUE EUROPÄISCHE PATENTSCHRIFT

(11) **EP 2 094 969 B2**
(45) Veröffentlichungstag und Bekanntmachung des Hinweises auf die Entscheidung über den Einspruch: **20.02.2019**
(45) Hinweis auf die Patenterteilung: 22.10.2014
(21) Anmeldenummer: 07846851.9
(22) Anmeldetag: 27.11.2007
(51) Int. Cl.: F03D 11/04, F03D 11/00

(54) **TURM EINER WINDKRAFTANLAGE**
TOWER OF A WIND POWER STATION
TOUR D'UNE ÉOLIENNE

(30) Priorität: 27.11.2006 DE 102006056274
(43) Veröffentlichungstag der Anmeldung: 02.09.2009
(73) Patentinhaber: Senvion GmbH, 22297 Hamburg (DE)
(72) Erfinder: SCHÜTTENDIEBEL, Ralf, 49074 Osnabrück (DE)
(74) Vertreter: Glawe, Delfs, Moll
(86) Internationale Anmeldenummer: PCT/EP2007/010289
(87) Internationale Veröffentlichungsnummer: WO 2008/064861

(56) Entgegenhaltungen:
- EP-A2- 1 729 007
- BE-A- 451 404
- DE-A1- 2 804 711
- DE-A1-102004 028 253
- DE-A1-102005 012 817
- DE-B3- 10 230 273
- DE-B3-102005 033 600
- DE-U1- 20200 401 780
- FR-A- 901 698
- GB-A- 1 422 662
- US-B1- 6 470 645
- <<<N O N - C I T E D D O C U M E N T>>> Verlag Harri Deutsch, Frankfurt

## Beschreibung

Die Erfindung betrifft einen Turm einer Windkraftanlage mit einem Unterteil in Form eines Gitterturms mit wenigstens drei Eckstielen und einem Oberteil eines, im Wesentlichen im Querschnitt runden, Rohrturms, wobei im Übergangsbereich der obere Anschlussbereich, insbesondere die Oberseite, des Unterteils mittels eines Übergangskörpers mit dem oberen Anschlussbereich, insbesondere der Unterseite, des Oberteils verbunden ist.

Beispielsweise ist ein solcher Turm unter der Bezeichnung OWEC Jacket Quattropod der Firma OWEC Tower A/S bekannt. Ein derartiger Turm einer Windenergieanlage ist in WO-A-2006/004417 offenbart.

Ein weiterer Turm einer Windenergieanlage ist in DE-B-103 39 438 beschrieben, wobei ein zwischen einem unteren Turmabschnitt mit einem Gitterturm und einem oberen Turmabschnitt mit einem Rohrturm angeordnetes Übergangsstück vorgesehen ist. Das Übergangsstück ist derart ausgebildet, dass dessen horizontale Erstreckung im unteren Bereich größer als dessen horizontale Erstreckung im oberen Bereich ist.

Die beiden Turmformen eignen sich dazu, dass Windenergieanlagen offshore, d.h. in einem Meer, errichtet werden können.

FR 901 698 A offenbart eine Windkraftanlage mit einem Gitterturm und einer oberhalb vom Gitterturm angeordneten hydraulischen Drehvorrichtung zur Dämpfung von Kreiselkräften.

DE 28 04 711 A1 offenbart eine Windkraftmaschine mit einer starren Formkonstruktion, wobei auf dem Turm der Windkraftmaschine außen eine schraubenförmige Bahn angebracht ist.

BE 451 404 A offenbart eine Windkraftmaschine mit einem Gitterturm.

Ausgehend von diesem Stand der Technik ist es Aufgabe der vorliegenden Erfindung, einen Turm einer Windkraftanlage mit einer hohen Stabilität bereitzustellen, der beispielsweise offshore errichtet werden kann, wobei der Turm in seinem Aufbau einfach sein soll und die Errichtung des Turms zu wirtschaftlich vertretbaren Kosten realisierbar sein soll.

Die Aufgabe wird gelöst durch einen Turm mit den Merkmalen des Anspruchs 1.

Die Erfindung beruht auf dem Gedanken, dass der Übergang von einem Gittermast bzw. Gitterturm zu einem Rohrturm, auf dem eine Windenergieanlage bzw. eine drehbar gelagerte Maschinengondel mit einem Rotor und mit mindestens einem Rotorblatt angeordnet sind, in einem Übergangsbereich mittels dem Übergangskörper verbunden sind, wobei die Eckstiele des Unterteils in den Bereich des Übergangskörpers hineinragen und im konisch ausgebildeten Übergangsbereich mit dem Kegelstumpfmantel bzw. den Segmenten des Kegelstumpfmantels verschweißt sind. Vorzugsweise ist in einer Ausgestaltung die Neigung der Rohrturmwandung geringer als die Neigung des Kegelstumpfmantels.

Hierdurch wird ein effizienter und gleichmäßiger Kraftfluss vom runden, als Schalentragwerk ausgeführten Rohrturm zum eckigen Gitterturm mit diskretem Lastfaden über die Eckstiele erreicht. Gleichzeitig wird durch die Schweißverbindung der Eckstiele mit dem Kegelstumpfmantel bzw. den -segmenten das Schweißnahtvolumen im Übergangsbereich erheblich reduziert, wobei es möglich ist, Standardbauteile, beispielsweise in Form von Standardrohrprofilen oder Standardblechen, die in der Regel nur geringfügig oder nicht bearbeitet werden oder sind, zu verwenden.

Darüber hinaus werden auch schräge Rohranschlüsse im Übergangsbereich vom Gitterturm zum Rohrturm vermieden, die eine komplizierte Geometrie aufweisen. Dadurch wird insgesamt ein einfacher Aufbau eines Turms einer Windenergieanlage erreicht. Der erfindungsgemäße Turm hat daher den wesentlichen Vorteil, dass bei einer schlanken Geometrie des Turms eine hohe Torsions- und/oder Biegebelastung erreicht wird. Gleichzeitig wird bei der hohen Torsions- und/oder Biegebelastbarkeit das Gewicht des Kegelstumpfmantels bzw. des Übergangskörpers optimiert.

Eine alternative Lösung erfolgt bei einem Turm der eingangs genannten Art dadurch, dass der Übergangskörper, insbesondere ein nach Art oder in Form eines Kegelstumpfmantels ausgebildeter Übergangskörper, auf seiner Außenseite mit einer Neigung ausgebildet ist, die der Neigung der Eckstiele des Unterteils entspricht, wobei insbesondere die Eckstiele des Unterteils mit der Unterseite des Übergangskörpers verbunden sind. Hierdurch wird ebenfalls ein effizienter und gleichmäßiger Kraftfluss vom runden Rohrturm zum eckigen Gitterturm mit seinen Eckstielen erreicht.

Eine zuverlässige Verbindung wird dadurch erreicht, daß der oder die Querschnitte der Eckstiele im Übergangsbereich abschnittsweise und/oder im Bereich der Verbindung mit dem Kegelstumpfmantel im Wesentlichen unverändert sind. Dadurch ist es möglich, standardisierte Rohrprofile oder dergleichen als Eckstiele zu verwenden.

Eine bevorzugte Ausführungsform zeichnet sich weiter dadurch aus, dass der oder die Eckstiele im Übergangsbereich durchgehend, insbesondere knickfrei, ausgebildet sind, wodurch keine Querschnittssprünge der Eckstiele sowie keine Spannungsüberhöhungen im Übergangsbereich entstehen. Gleichzeitig kann auf zusätzliche Aussteifungen im Übergangsbereich an den Eckstielen oder am Übergangskörper verzichtet werden. Dadurch haben die Längsachsen der Eckstiele im Bereich des Übergangs bzw. im Übergangsbereich keine Richtungsänderung. Somit werden auftretende Biegemomente am Turm über Schubkräfte entlang der, insbesondere senkrecht ausgebildeten, Schweißnähte an den Eckstielen bzw. Eckstielrohren in den Gitterturm übertragen.

Darüber hinaus ergibt sich durch die knickfreie Ausbildung der Eckstiele wenigstens im Übergangsbereich eine bessere Zugänglichkeit während des Schweißprozesses zur Verbindung der Eckstiele mit dem Kegelstumpfmantel.

Bevorzugterweise entspricht in einer Ausführungsform der Neigungswinkel wenigstens eines Eckstiels oder mehrerer Eckstiele dem Neigungswinkel des Kegelstumpfmantels, so dass ein homogener Kraftfluss über den Kegelstumpfmantel bzw. den Übergangskörper ermöglicht ist und die Spannungsüberhöhungen am Bauteil verringert werden, wodurch sich zudem der Aufwand für Inspektionen während des Betriebs der Windenergieanlage vermindert.

Außerdem ist gemäß einer Ausgestaltung vorgesehen, dass wenigstens ein Eckstiel, insbesondere an seinen Längsseiten, mit dem Kegelstumpfmantel verschweißt ist oder wird. Durch das Verschweißen des Eckstiels in Form von vorzugsweise zwei Längsnähten an den Längsseiten ergibt sich gegenüber den bekannten Konstruktionen ein deutlicher geringeres Schweißnahtvolumen, wobei bei einer erhöhten Steifigkeit des Übergangskörpers die Masse bzw. das Gewicht des Übergangskörpers reduziert ist.

Weiter ist vorgesehen, dass am Kegelstumpfmantel an der Außenseite eine Arbeitsplattform angeordnet ist, wodurch Wartungsarbeiten am Übergangskörper bzw. am Turm ausgeführt werden können.

Hierzu wird weiterhin vorgeschlagen, dass die an der Außenseite vorgesehene Arbeitsplattform am Kegelstumpfmantel im unteren Bereich und/oder im Übergang zum Unterteil, vorzugsweise umlaufend, ausgebildet ist.

Dadurch, dass der Innenraum des Kegelstumpfmantels, insbesondere mittels wenigstens einer inneren Plattform, wenigstens teilweise abgeschlossen ist, kann eine Art Schutzraum oder Raum im Inneren des Kegelstumpfmantels ausgebildet werden, in den beispielsweise Module oder Betriebseinrichtungen der Windenergieanlage (z.B. Transformator, Umrichter, Schaltanlage und dergleichen) aufgenommen werden können.

Insbesondere sind im Innenraum des Kegelstumpfmantels eine oder mehrere Plattformen ausgebildet, so dass unterhalb des Oberteils bzw. des Rohrturms im Innenraum des Übergangskörpers Zutrittsräume oder Arbeitsräume bzw. Betriebsräume ausgebildet werden, wodurch es möglich ist, beispielsweise eine Windenergieanlage, die offshore in einem Gewässer errichtet worden ist, von unten über die Innenräume des Übergangskörpers auf einfache Weise und wettergeschützt zu erreichen. Hierbei sind in abgeschlossenen Betriebsräumen oder Arbeitsräumen im Innenraum des Übergangskörpers entsprechende Module oder Betriebseinrichtungen der Windenergieanlage angeordnet, wodurch die Erreichbarkeit sowie die Wartung dieser Module bzw. Einrichtungen vereinfacht wird.

Hierbei ist es möglich, beispielsweise eine gut erreichbare offene Plattform im Innenraum zu erreichen, wobei über dieser Plattform eine weitere verschlossene bzw. verschließbare Plattform angeordnet ist, wodurch nur das Wartungspersonal entsprechenden Zutritt zu der Windenergieanlage bei einem Wartungsfall erhält. Dadurch werden zwei unterschiedliche Arbeitsebenen in dem Übergangskörper ausgebildet. Beispielsweise wird eine untere Arbeitsebene als offener Betriebsraum mit einer offenen Befahranlage ausgebildet, während mit einer zweiten Plattform eine obere Arbeitsebene als ein geschlossener elektrischer Betriebsraum ausgebildet wird.

Somit wird mittels einer oberen Plattform im Innenraum des Kegelstumpfmantels bzw. Übergangskörper ein oberer, insbesondere abgeschlossener oder abschließbarer, Raum, vorzugsweise Arbeitsraum oder elektrischer Betriebsraum, ausgebildet. Ein geschlossener elektrischer Betriebsraum darf hierbei nur in Begleitung von elektrisch unterwiesenen Personen oder von elektrotechnischen Fachkräften betreten werden.

Vorteilhafterweise ist im oberen Raum des Innenraums des Kegelstumpfmantels eine, insbesondere obere, Befahranlage vorgesehen oder aufgenommen bzw. ist darin angeordnet, so dass das Oberteil (Rohrturm) der Windkraftanlage mittels der Befahranlage vom Übergangskörper befahrbar bzw. erreichbar ist, wodurch das Wartungspersonal bei der Durchführung einer Wartung wettergeschützt zu der Gondel einer Windkraftanlage bzw. Windenergieanlage sicher gelangt.

Gemäß einer bevorzugten Weiterbildung ist im oberen Raum des Innenraums des Kegelstumpfmantels wenigstens eine Betriebseinrichtung der Windkraftanlage, vorzugsweise Spannungsschaltanlage, insbesondere Mittelspannungsschaltanlage, vorgesehen.

Darüber hinaus wird nach der Durchführung einer Wartungsmaßnahme die Befahranlage, beispielsweise in Gestalt eines Fahrkorbs oder dergleichen, im oberen Raum des Innenraums des Kegelstumpfmantels, der als oberer Betriebsraum ausgebildet ist, aufgenommen.

Weiterhin ist in einer vorteilhaften Ausführungsform mittels einer unteren Plattform im Innenraum des Kegelstumpfmantels ein unterer, insbesondere offener, Raum, vorzugsweise Arbeitsraum, ausgebildet, über den das Wartungspersonal zu dem darüber ausgebildeten zweiten, vorzugsweise geschlossenen, Arbeits- bzw. Betriebsraum Zutritt erhalten kann.

Überdies zeichnet sich eine vorteilhafte Ausgestaltung dadurch aus, dass im unteren Raum des Innenraums des Kegelstumpfmantels eine, insbesondere untere, Befahranlage aufgenommen ist oder wird, so dass der Übergangskörper der Windkraftanlage mittels der Befahranlage vom Unterteil, insbesondere Gitterturm, befahrbar bzw. erreichbar ist.

Darüber hinaus ist es günstig, dass im Innenraum des Kegelstumpfmantels eine untere Befahranlage und eine obere Befahranlage aufgenommen sind oder werden, wodurch die Durchführung von Wartungsmaßnahmen oder Inspektionen erleichtert werden, da die entsprechenden Personen nach Erreichen des Innenraums des Kegelstumpfmantels bzw. des Übergangskörpers Zutritt zu dem Unterteil bzw. dem Rohrturm der Windkraftanlage auf einfache Weise erhalten. Außerdem wird durch die Befahranlagen erreicht, dass die Wartungspersonen sicher zu den entsprechenden Einrichtungen gefördert werden. Die Trennung in eine unteren Befahranlage und eine oberen Befahranlage ist vorteilhaft, da sehr unterschiedliche Anforderungen an die Befahranlage gestellt werden. Die untere Befahranlage ist als offene Befahranlage ausgeführt, d.h. sie verläuft außerhalb der Windenergieanlage und ist den Wettereinflüssen, insbesondere dem aggressiven Seeklima ausgesetzt. Außerdem verläuft sie entlang der Neigung eines Eckstieles des Unterteils, ist also gegenüber der Vertikalen geneigt. Die obere Befahranlage ist hingegen genau vertikal im Rohrturm angeordnet. Es handelt sich um eine geschlossenen Fahranlage, dass heißt, sie verläuft im Inneren der Windenergieanlage und ist somit nur sehr eingeschränkt den klimatischen Bedingungen ausgesetzt.

In einer bevorzugten Weiterbildung ist außerdem vorgesehen, dass die untere Befahranlage in Ruhestellung im Innenraum des Kegelstumpfmantels bzw. Übergangskörpers angeordnet ist oder wird, so dass während der aktiven Nutzung der Windenergieanlage zur Erzeugung von elektrischer Leistung, die untere Befahranlage wettergeschützt, d.h. vor äußeren Einflüssen gegen die Witterung oder Wellengang oder dergleichen, und sicher im Übergangskörper untergebracht ist. Soll die Windenergieanlage gewartet oder inspiziert werden, wird die untere Befahranlage aus dem Übergangskörper nach unten ausgefahren, wodurch die entsprechenden Personen Zutritt zum Übergangskörper bzw. den unterschiedlichen Arbeitsplattformen und -räumen im Übergangskörper und im Oberteil erhalten.

Ferner ist es günstig, wenn der Kegelstumpfmantel im unteren Bereich und/oder im oberen Bereich mit einem T-Profil oder einem L-Profil ausgebildet ist, um eine zuverlässige Verbindung mit dem Rohrturm und/oder mit der zusätzlich angeordneten Arbeitsplattform oder inneren Plattform zu erreichen.

Eine zuverlässige Verbindung der Eckstiele mit dem Kegelmantel wird dadurch gewährleistet, wenn die Eckstiele über eine Länge von mehr als zwei Durchmessern des Eckstiels mit dem Kegelstumpfmantel verbunden sind. Vorzugsweise ist die Länge der Schweißnähte zwischen den Eckstielen und dem Kegelstumpfmantel im Bereich des zweifachen bis zehnfachen Durchmessers der Eckstiele. Vorzugsweise entspricht die Länge der Schweißnähte dem drei- bis achtfachen, vorzugsweise dem vier- bis sechsfachen Durchmesser der Eckstiele. Bei nicht runden Eckstielen ist mit Durchmesser eine mittlere Querschnittsabmessung bezeichnet.

In einer Weiterbildung weist der Kegelstumpfmantel wenigstens eine Ausnehmung, insbesondere zwischen zwei Eckstielen, und/oder eine Zugangsöffnung auf. Durch die vorgesehene Ausnehmung wird das Gewicht am Kegelstumpfmantel entsprechend reduziert. Ferner wird durch die Zugangsöffnung, die beispielsweise auch verschließbar ausgebildet sein kann, ein Zugang zu einem Innenraum im Kegelstumpfmantel erreicht.

Überdies ist in einer Weiterbildung vorgesehen, dass ein oder mehreren Eckstiele im Übergangsbereich kontinuierlich verlaufend in Längsrichtung und/oder in Umfangsrichtung ausgebildet sind und/oder mit dem Kegelstumpfmantel verschweißt sind oder werden. Überdies sind vorteilhafterweise die Eckstiele als Hohlprofile, insbesondere Rohre, vorzugsweise aus Stahl, ausgebildet. Außerdem sind oder werden die Eckstiele aus standardisierten Rohrprofilen gebildet, da Standardrohre, z.B. aus dem Pipelinebau, sehr preisgünstig und in großen Mengen verfügbar sind.

Ferner zeichnet sich der Turm dadurch aus, dass der Kegelstumpfmantel wenigstens eine Ringsteife oder mehrere Ringsteifen, vorzugsweise am unteren und/oder oberen Ende des Kegelstumpfmantels, aufweist.

Hierzu ist es günstig, wenn eine im unteren Bereich des Kegelstumpfmantels vorgesehene Ringsteife einen oder mehrere Eckstiele wenigstens teilweise oder vollständig umschließt. Hierzu umgibt die Ringsteife an der Außenseite bzw. an der Innenseite des Kegelstumpfmantels die Eckstiele. Dabei ist es von Vorteil, wenn die Ringsteife beispielsweise ein T-förmiges Profil aufweist.

Überdies ist es vorteilhaft, wenn die, vorzugsweise im unteren Bereich des Kegelstumpfmantels oder an deren Unterseite vorgesehene, Ringsteife mit einem oder mehreren Eckstielen teilweise verbunden ist, so dass insbesondere die Verbindung von Ringsteife mit einem Eckstiel diskontinuierlich ausgebildet ist. Dadurch werden bei entsprechenden mechanischen Belastungen der Windkraftanlage, beispielsweise bei Biegung und/oder Torsion des Turms, d.h. des Oberteils sowie des Übergangskörpers und des Gitterturms ein entsprechendes elastisches Ausweichen der Eckstiele ermöglicht, wodurch die Materialbeanspruchung im kritischen unteren Anbindungspunkt des Eckstiels an den Kegelstumpfmantel herabgesetzt wird. Durch die diskontinuierliche Verbindung der Ringsteife mit einem oder mehreren Eckstielen werden die mechanischen Beanspruchungen auf einen Turm einer Windenergieanlage in einem besonders kritischen Bereich deutlich vermindert, so dass die Lebensdauer von stark beanspruchten Bauteilen, insbesondere Eckstiele und Kegelstumpfmantel, signifikant erhöht wird.

Hierzu ist weiterhin vorgesehen, dass zwischen der Ringsteife und dem in einer Öffnung der Ringsteife durchstoßenden Eckstiel eine oder mehrere, insbesondere nierenförmige, Aussparungen vorgesehen sind, wodurch ein elastisches Ausweichen der Eckstiele, beispielsweise in tangentialer Richtung zum Übergangskörper, ermöglicht wird. Hierbei sind in radialer Richtung bezogen auf den Kegelstumpfmantel die Eckstiele fest bzw. steif mit dem Kegelmantel verbunden.

Ferner ist gemäß einer bevorzugten Ausführungsform vorgesehen, dass zwischen der Ringsteife und dem in einer Öffnung der Ringsteife durchstoßenden Eckstiel des Gitterturms eine oder mehrere, insbesondere nierenförmige, Aussparungen vorgesehen sind, wodurch Torsions- und/oder Biegebelastungen des Turms in tangentialer Richtung des Kegelstumpfmantels bzw. in Umlaufrichtung weicher auf die Eckstiele übertragen werden, da der Steifigkeitssprung im Übergang von den Eckstielen auf die Ringsteife aufgrund der Aussparungen reduzierter übertragen wird. Hierbei sind nierenförmige Aussparungen beidseits des Eckstiels im Bereich einer Öffnung der Ringsteife, die von einem Eckstiel durchstoßen wird, in Umfangsrichtung des Kegelstumpfmantels vorgesehen.

Außerdem ist es vorteilhaft, wenn die Ringsteife mit einem oder mehreren Eckstielen in Umfangsrichtung des Kegelstumpfmantels nicht verbunden ist. Darüber hinaus zeichnet sich der Turm dadurch aus, dass die Ringsteife mit einem oder mehreren Eckstielen quer, insbesondere senkrecht, zur Umfangsrichtung des Kegelstumpfmantels, verbunden ist.

Weiterhin ist es gemäß einer bevorzugten Weiterbildung des Turms vorgesehen, dass der Kegelstumpfmantel im Bereich der Ringsteife eine oder mehrere, vorzugsweise tropfenförmige oder nasenförmige, Aussparungen aufweist, so dass bei einer Biege- und/oder Torsionsbelastung des Turms die Ausweichbewegung der Eckstiele in tangentialer Richtung des Kegelstumpfmantels ermöglicht wird, wodurch auch die mechanischen Belastungen und Beanspruchungen auf den Übergangskörper und die Ringsteife, sowie auf den Gitterturm verringert werden.

Hierzu ist es günstig, dass die Ringsteifen als L-Profil oder als T-Profil ausgebildet sind.

Weiterhin ist es bevorzugt, wenn am unteren Ende des Kegelstumpfmantels eine oder mehrere Ringsteifen, insbesondere mit einem T-Profil oder einem L-Profil, zwischen den Eckstielen angeordnet oder angeschweißt sind.

Überdies ist es gemäß der Erfindung vorgesehen, dass der Übergangskörper unterhalb der Rotorblattspitzen angeordnet ist, wobei vorteilhafterweise der Rohrturm des Oberteils mindestens 1/6 der gesamten Turmhöhe bildet.

Weiterhin wird die Aufgabe gelöst durch eine Windkraftanlage, die mit einem erfindungsgemäßen, voranstehend beschriebenen Turm ausgebildet ist. Zur Vermeidung von Wiederholungen wird auf die vorangehenden Ausführungen ausdrücklich verwiesen.

Ebenso wird die Aufgabe gelöst durch eine Verwendung eines Übergangskörpers in einem Turm einer Windkraftanlage, wobei die Einzelheiten des Übergangskörpers bzw. des Turm vorangehend beschrieben sind.

Die Erfindung wird nachstehend und ohne Beschränkung des allgemeinen Erfindungsgedankens anhand der Zeichnungen näher beschrieben, wobei bezüglich aller im Text nicht näher erläuterten erfindungsgemäßen Einzelheiten ausdrücklich auf die Zeichnungen verwiesen wird. Es zeigen:
- Fig. 1a, 1b: jeweils eine Seitenansicht eines Ausschnitts eines Turms einer Windenergieanlage;
- Fig. 2: eine perspektivische Ansicht eines erfindungsgemäßen Übergangskörpers mit Querschnitten durch die Verbindungsstellen;
- Fig. 3: eine weitere Seitenansicht einer weiteren Ausführungsform eines Übergangskörpers;
- Fig. 4: einen Querschnitt durch einen Übergangskörper;
- Fig. 5: schematisch eine Ansicht eines Übergangskörpers mit Querschnittsdarstellungen der Eckstiele;
- Fig. 6: eine schematische Detailansicht einer Verbindungsstelle zwischen einem Eckstiel und dem Kegelstumpfmantel;
- Fig. 7a: eine Draufsicht auf einen Kegelstumpfmantel bzw. Übergangskörper unter Weglassung des darauf angeordneten Rohrturms;
- Fig. 7b: eine Draufsicht auf eine Ausführungsform einer Ringsteife, die im Bereich der Unterseite eines Übergangskörpers ausgebildet ist und
- Fig. 8a, 8b: jeweils eine Vorder- bzw. Rückansicht eines erfindungsgemäßen Übergangskörpers mit Darstellungen von Einrichtungen im Innenraum des Übergangskörpers unter Weglassung der Umhüllenden des Kegelstumpfmantels des Übergangskörpers.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

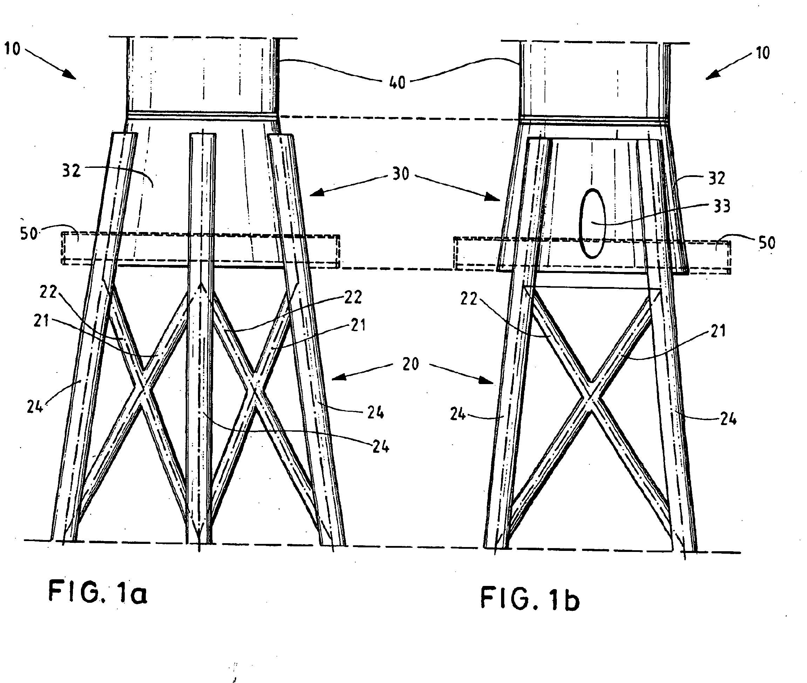

Fig. 1 a und 1 b zeigen jeweils eine Seitenansicht eines Ausschnitts eines Turm 10 einer Windkraftanlage, wobei der Turm 10 aus drei Turmbausteinen im Wesentlichen besteht. Die Ansichten in Fig. 1a und 1b des Turms 10 sind um 45° zueinander versetzt.

Der Turm 10 weist ein Unterteil 20 in Form eines Gitterturms 20 auf, den ein konisch ausgebildeter Übergangskörper 30 angeordnet ist. Der Übergangskörper 30 verjüngt sich nach oben hin und ist unterhalb eines Rohrturms 40 angeordnet.

Der Übergangskörper 30 bildet somit den Übergang zwischen dem Gitterturm 20 und dem Rohrturm 40. Hierbei verfügt der Gitterturm 20 über Querstreben 21, 22, die die Eckstiele 24 des Gitterturms miteinander verbinden. Die Eckstiele 24 stehen beispielsweise auf einem Fundament oder auf dem Boden.

Die Neigung der Eckstiele 24 (über die Diagonale gemessen) beträgt bevorzugt 4° bis 20°, vorzugsweise 6° bis 10°, wobei die Neigung insbesondere von den Bodenverhältnissen abhängt. Bei besonders weichem Boden kann es von Vorteil sein, ein unteres Gitterturmsegment zu bauen, welches eine deutlich größere Eckstielneigung aufweist als der obere Teil des Gitterturms.

Der Rohrturm 40 ist zylindrisch oder mit geringer Neigung ausgeführt, d.h. mit einer Neigung < 5°, insbesondere < 3°, vorzugsweise <1.5°.

Der Übergangskörper 30 bildet den Übergang zwischen dem Gitterturm 20 und dem Rohrturm 40. Hierzu ist der Übergangskörper 30 in Form eines Kegelstumpfmantels 32 ausgebildet, wobei der Kegelstumpfmantel 32 aus mehreren Kegelstumpfsegmenten bestehen kann, die miteinander bei der Montage verbunden werden.

Der Kegelstumpfmantel 32 bildet eine Verbindungsstruktur bzw. eine Art Verbindungseinrichtung zwischen dem Unterteil 20 bzw. dem oberen Anschlussbereich des Unterteils 20 und dem Oberteil 40 bzw. dem unteren Anschlussbereich des Oberteils 40 aus. Um eine zuverlässige Verbindung zwischen dem Gitterturm 20 mit den Eckstielen 24 und dem Kegelstumpfmantel 32 zu erreichen, ragen die Eckstiele 24 mit ihren Fortsätzen in den Übergangsbereich zwischen dem Gitterturm 20 und dem Rohrturm 40 hinein und sind über Schweißnähte an den Längsseiten der Eckstiele 24 mit dem Kegelstumpfmantel 32 verbunden. Dabei sind die mit dem Kegelstumpfmantel 32 verbundenen Eckstiele 24 mit einer Neigung ausgebildet, die der Neigung des Kegelstumpfmantels im Wesentlichen entspricht.

In erfindungsgemäßen Ausführungen sind drei bis zehn Eckstiele vorgesehen, die mit dem Kegelstumpfmantel 32 durch zwei Längsnähte im Übergangsbereich, d.h. auf beiden Seiten der Eckstiele mit dem Kegelstumpfmantel verschweißt werden. Hierbei verlaufen die Eckstiele 24 im Wesentlichen ohne Querschnitts- und Richtungsänderung, d.h. auch im Übergangsbereich knickfrei, in den Übergangsbereich bzw. den Kegelstumpfmantel 32 aus. Insbesondere sind die Eckstiele als Hohlprofile, vorzugsweise als Rohre, ausgebildet.

In Fig. 1a, 1b ist der Turm 10 mit einer Arbeitsplattform 50 ausgebildet, wobei die Arbeitsplattform 50 am unteren Ende des Kegelstumpfmantels 32 angeordnet ist. Die Arbeitsplattform 50 ist umlaufend um den Kegelstumpfmantel 32 wenigstens abschnittsweise oder vollständig umlaufend um den Kegelstumpfmantel 32 herum montiert.

Darüber hinaus kann in einer Ausführungsform vorgesehen sein, dass eine oder mehrere Zugangsöffnungen oder Ausnehmungen im Kegelstumpfmantel 32 vorgesehen sind, wodurch ein Zugang zum Innenraum des Kegelstumpfmantels 32 ermöglicht wird. Gleichzeitig kann durch entsprechende Ausnehmungen, wie sie beispielsweise in Fig. 1b mit dem Bezugszeichen 33 bezeichnet ist, das Gewicht eines Kegelstumpfmantels 32 bzw. eines Kegelstumpfmantelsegments reduzieren, ohne Einbußen an der Steifigkeit des Bauteils zu erfahren.

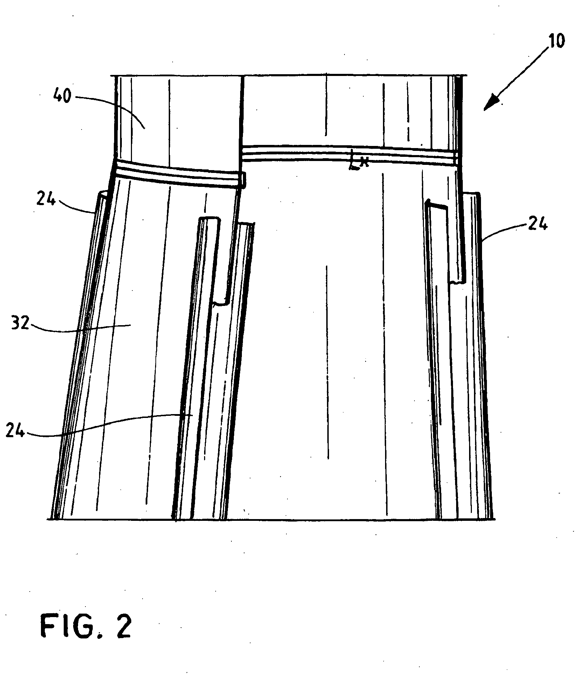

Fig. 2 zeigt in einer perspektivischen Darstellung einen Ausschnitt eines Kegelstumpfmantels 32 mit entsprechenden Querschnitten durch die daran angeschweißten Eckstiele 24. Die Eckstiele 24 sind an den Längsseiten mit dem Kegelstumpfmantel 32 verbunden, wobei der Kegelstumpfmantel 32 zwischen die Eckstiele 24 eingeschweißt ist. Dies bedeutet, dass der Querschnitt eines Eckstiels 24 nicht von dem Mantelblech des Kegelstumpfmantels 32 durchstoßen wird. Der Übergang der Eckstiele 24 vom Gitterturmteil 20 in den Übergangsbereich zwischen dem Unterteil 20 und dem Oberteil 40 erfolgt ohne Knick, d.h. die Längsachsen der Eckstiele 24 verlaufen ohne Richtungsänderung, vorzugsweise über die obere Hälfte oder die gesamte Länge der Eckstiele 24.

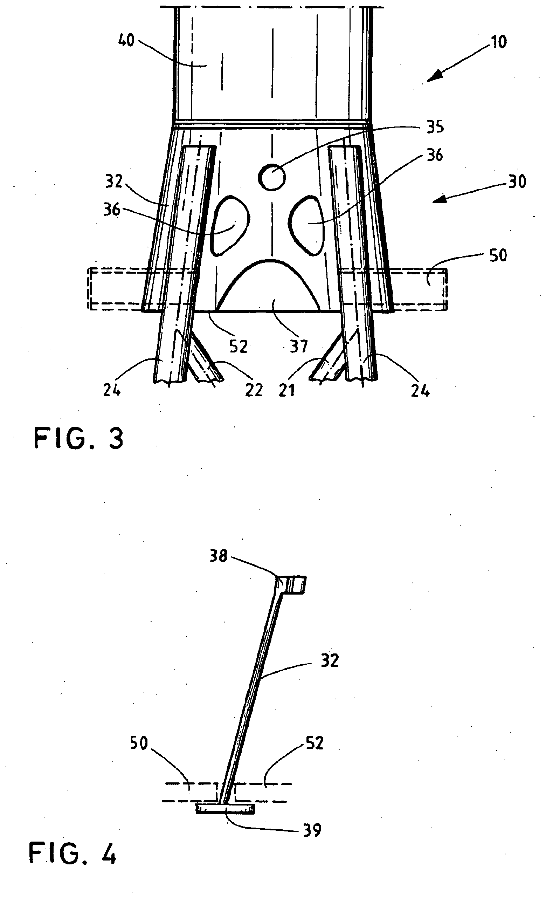

In Fig. 3 ist eine weitere Ansicht eines Turms 10 dargestellt, wobei der Kegelstumpfmantel 32 über abgerundete Ausnehmungen 35, 36, 37 verfügt. Darüber hinaus ist in einer Ausgestaltung des Turms 10 am unteren Ende des Kegelstumpfmantels 32 im Innenraum wenigstens abschnittsweise eine innere Plattform 52 vorgesehen, so dass der Innenraum des Kegelstumpfmantels 32 begehbar ist. gleichzeitig kann im ausgebildeten Innenraum wenigstens ein Modul einer Windenergieanlage, z.B. ein Transformator oder ein Umrichter oder dergleichen angeordnet werden.

Bei Windenergieanlagen, die onshore errichtet werden, ist es möglich, dass die Eckstiele und das Mantelblech des Kugelstumpfmantels 32 mit Hilfe von Schraubverbindungen miteinander verbunden werden. Hierzu sind an den Eckstielen 24 entsprechende Laschen oder dergleichen ausgebildet. Darüber hinaus ist es für OnshoreWindenergieanlagen möglich, dass ein vorzugsweise kurzer Eckstiel mit dem Kegelstumpfmantel 32 verschweißt ist und ein Schraubenflansch zum eingeschweißten Eckstiel im Bereich der unteren Ringsteife vorgesehen ist, so dass über eine Flanschverbindung der Gitterturm mit dem Kegelstumpfmantel 32 verbunden wird.

Darüber hinaus ist es in einer weiteren Ausgestaltung möglich, dass die Diagonalstreben sowie die Eckstiele 24 des Gitterturms im oberen Bereich mit einer verstärkten Wandung als die im unteren Bereich der Streben bzw. Eckstiele ausgebildet sind, so dass eine hohe Torsions- sowie Biegebelastung des Turms bei einer schlanken Geometrie des Turms entsprechend aufgefangen werden kann.

Fig. 4 zeigt einen Querschnitt durch einen erfindungsgemäßen Kegelstumpfmantel 32, der im oberen Bereich mit einem L-förmigen Profil 38 ausgebildet ist. Das L-Profil 38 dient hierbei als Flanschverbindung zum Gitterturm 40. Im unteren Bereich des Kegelstumpfmantels 32 ist ein T-Profil 39 ausgebildet, so dass auf den Schenkeln des T-Profils die Arbeitsplattform 50 sowie die innere Plattform 52 angeordnet werden können. Das L-Profil 38 sowie das T-Profil 39 können in einer Ausgestaltung auch abschnittsweise am Umfang des Kegelstumpfmantels 32 ausgebildet sein, so dass sie auch die Funktion von entsprechenden Ringsteifen haben und den Kegelstumpfmantel am oberen sowie unteren Bereich verstärken. Diese Ringsteifen verlaufen zwischen den Eckstielen und durchstoßen den Eckstielquerschnitt nicht.

Typischerweise hat der Kegelstumpfmantel 32 bei einer 5-6 MW-Anlage mit einem Durchmesser des Rotors mit ca. 126 m einen Anschlussdurchmesser für den Rohrturm von 4 m bis 7 m. Die Höhe des Kegelstumpfmantels 32 bzw. des Übergangskörpers 30 liegt typischerweise zwischen 4 m bis 6 m.

Beispielsweise können bei einer Windenergieanlage mit einer Leistung von 5 bis 6 MW die Eckstiele einen Durchmesser von 400 bis 1.200 mm aufweisen. Vorzugsweise ist der Durchmesser kleiner als 955 mm, insbesondere 864 mm, da entsprechende standardisierte Blechtafeln zur Herstellung der Eckstiele verwendet werden können. Die entsprechende Wandstärke der Eckstiele liegt zwischen 15 bis 50 mm und vorzugsweise ist die Wandstärke der Eckstiele 35 mm.

Der Außendurchmesser des Kopfflansches beträgt vorzugsweise zwischen 4,2 bis 7,0 m. Für Straßentransporte wird ein Außendurchmesser des Kopfflansches von 4,3 m bevorzugt. Vorzugsweise ist der Außendurchmesser bei Offshore-Windenergieanlagen typischerweise in der Größenordnung von 5,5 m.

Die Höhe des Übergangskonus bzw. des Kegelstumpfmantels 32 liegt zwischen 4,0 bis 6,0 m. Für Straßentransporte ist eine Höhe von 4,3 m geeignet. Für Offshore-Windenergieanlagen weist der Übergangskonus eine Höhe von 5,5 m typischerweise auf. Die Wandstärke des Kegelstumpfmantels beträgt 20 bis 60 mm, vorzugsweise 30 mm.

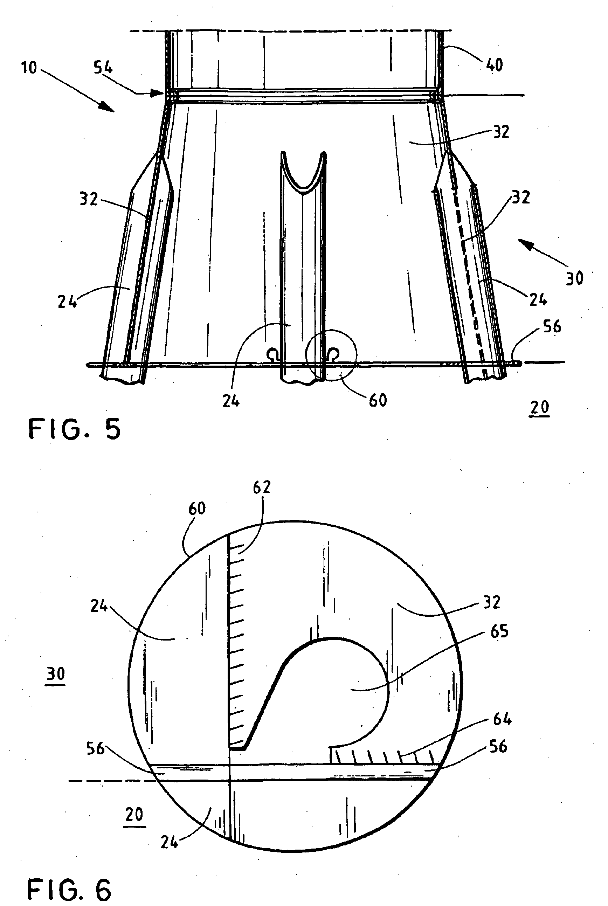

Fig. 5 zeigt eine weitere Ausführungsform eines Turms 10 einer Windkraftanlage bzw. Windenergieanlage im Querschnitt, wobei weiterhin Querschnittsdarstellungen der Eckstiele 24 dargestellt sind. Der Übergangskörper 30 bzw. der Kegelstumpfmantel 32 wird mit dem Rohrturm 40 mittels einer schematisch dargestellten Flanschverbindung 54 verbunden. Die Flanschverbindung 54 ist umlaufend kreisförmig sowohl an der Oberseite des Übergangskörpers 30 als auch an der Unterseite des Rohrturms 40 ausgebildet, wobei die Flanschverbindung 54 mit Hilfe von Bolzen bzw. Schraubbolzen hergestellt wird. Typischerweise weist die kreisförmige Flanschverbindung bei Windenergieanlagen der 3 bis 6 Megawatt-Klasse einen Durchmesser von 2,5 bis 6,5 Meter, vorzugsweise bis 5,5 Meter auf.

An der Unterseite des Kegelstumpfmantels 32 im Übergang vom Gitterturm 20 zum Übergangskörper 30 ist am unteren Ende des Kegelstumpfmantels 32 eine umlaufende Ringsteife 56 vorgesehen, die entsprechende Öffnungen aufweist, so dass die Ringsteife 56 im Bereich der Öffnungen von den Eckstielen 24 durchstoßen wird und die rohrförmigen Eckstiele 24 an den seitlichen Längsnähten mit dem Kegelstumpfmantel 32 im Bereich der Stoß- bzw. Nahtstellen mit dem Übergangskörper 30 bzw. dem Kegelstumpfmantel 32 verschweißt werden.

Die Eckstiele 24 sind im Bereich des Übergangskörpers 30 durchgehend im Querschnitt, vorzugsweise kreisförmig, geschlossen bzw. ausgebildet, so dass der Kegelstumpfmantel 32 im Bereich der Eckstiele 24 entsprechende form-und/oder funktionskomplementäre sowie nach unten geöffnete bzw. offene Einschnitte oder Aussparungen aufweist, in denen die rohrförmigen Eckstiele 24 eingepasst sowie angeordnet werden. Durch Verschweißen werden die Eckstiele 24 mit dem Übergangskörper 32 dauerhaft verbunden. Nur im oberen Bereich der Eckstiele 24 ragt, wie in Fig. 5 rechts erkennbar, ein oberes sowie kurzes, sich nach oben hin verjüngendes (End- )Stück des Kegelstumpfmantels 32 in das Rohrprofil des Eckstiels 24 hinein, und trennt es somit in zwei Halbschalen.

Um ein Eindringen von Wasser oder Feuchtigkeit in die Halbprofile und/oder Rohrprofile der Eckstiele 24 im oberen Bereich an ihren zulaufenden Enden zu verhindern, ist in einer Ausgestaltung vorgesehen, dass die Öffnungen der für die Eckstiele 24 verwendeten Rohrprofile mit einer entsprechenden Abdeckung oder dergleichen verschlossen werden. Die Abdeckungen für die Profile der Eckstiele 24 sind in Fig. 5 nicht dargestellt.

Ferner ist in Fig. 5 mit dem Bezugszeichen 60 ein Ausschnitt bezeichnet, der in Fig. 6 nochmals in einer vergrößerten Darstellung wiedergegeben ist. Der Ausschnitt 60 betrifft den unteren Übergang bzw. die Verbindung zwischen dem Eckstiel 24 und dem Kegelstumpfmantel 32 sowie mit der Ringsteife 56 im unteren Bereich des Kegelstumpfmantels 32.

Wie aus Fig. 6 ersichtlich, ist beim Übergang zwischen dem Eckstiel 24 bzw. dem geschlossenen Rohrprofil des Eckstiels 24 eine längs, d.h. senkrecht verlaufende, Nahtverbindung bzw. Schweißverbindung 62 zwischen dem Eckstiel 24 und dem Kegelstumpfmantel 32 ausgebildet. Darüber hinaus ist der Kegelstumpfmantel 32 mit der umlaufenden Ringsteife 56, die beispielsweise T- oder L-förmig ausgebildet ist und an der Unterseite des Kegelstumpfmantels 32 angeordnet ist, durch eine Schweißverbindung 64 verbunden.

Im unteren Übergangsbereich zwischen der senkrecht verlaufenden Schweißverbindung 62 und der waagerecht umlaufenden und im Bereich der Umschließung des Eckstiels 24 unterbrochenen Schweißverbindung 64 weist der Kegelstumpfmantel 32 im Bereich dieser Nahtstelle eine tropfen- oder nasenförmige Aussparung 65 auf, um die mechanischen Belastungen in diesem Übergangsbereich beim Übergang vom Gitterturm 20 zum Übergangskörper 30 bei mechanischen Belastungen des Turms 10 der Windkraftanlage zu verhindern. Durch die Ausbildung der Aussparungen 65 im Kegelstumpfmantel 32 beidseits eines Eckstiels 24 wird die Gefahr von beispielsweise Rissstellen oder andere Bruchstellen im Bereich dieser mechanisch stark belasteten Übergangsbereiche deutlich herabgesetzt.

Darüber hinaus ist aus Fig. 6 ersichtlich, dass der Gitterturm 20 unterhalb der Ringsteife 56 ausgebildet ist und somit den Übergangskörper 30 bzw. den Kegelstumpfmantel 32 nach unten begrenzt.

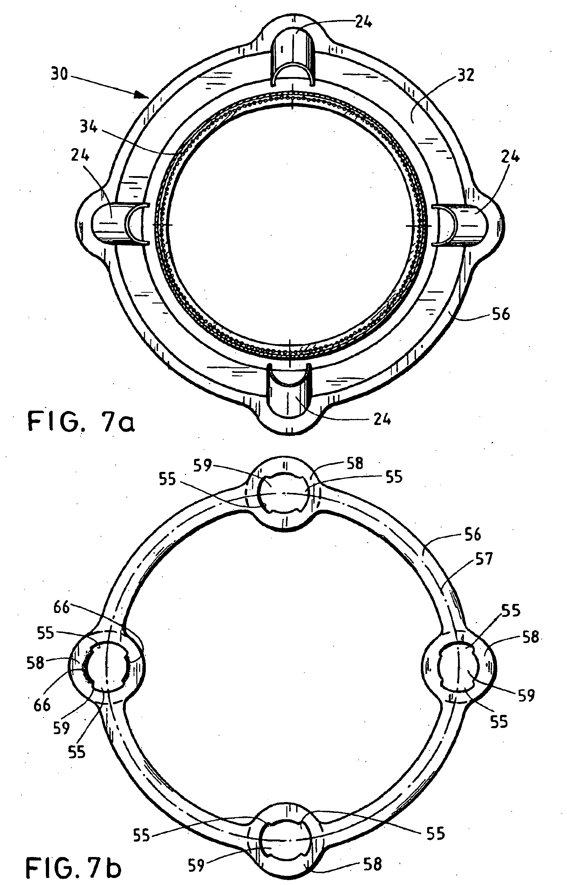

In Fig. 7a ist eine Draufsicht auf den Übergangskörper 30 bzw. den Kegelstumpfmantel 32 dargestellt, wobei der auf den Übergangskörper 30 angeordnete Rohrturm weggelassen wurde. Hierbei ist aus Fig. 7a ersichtlich, dass der Kegelstumpfmantel 32 an seiner Oberseite zum Rohrturm einen Flanschring 34 mit entsprechenden gleichmäßig ausgebildeten Bohrlöchern oder dergleichen ausgebildet ist.

Gemäß dem in Fig. 7a dargestellten Ausführungsbeispiel weist der Gitterturm vier Eckstiele 24 auf, die sternförmig Öffnungen der Ringsteife 56 (vgl. Fig. 7b) durchstoßen und mit einer vorbestimmten Neigung, die der Neigung des Kegelstumpfmantels 32 entspricht, im oberen Bereich des Kegelstumpfmantels 32 an den Längsseiten der rohrförmigen Eckstiele 24 mit dem Übergangskörper 30 verbunden sind. Eine bevorzugte Verbindung zwischen den Eckstielen 24 und dem Kegelstumpfmantel 32 wird durch Schweißverbindungen erreicht.

In Fig. 7b ist die Draufsicht auf eine Ringsteife 56 (vgl. Fig. 7a) dargestellt unter Weglassung des Übergangskörpers 30 bzw. des Kegelstumpfmantels 32 und der Eckstiele Die an der Unterseite des Kegelstumpfmantels 32 vorgesehene bzw. angeordnete Ringsteife 56 ist umlaufend als Ring bzw. kreisförmig ausgebildet, wobei innerhalb des Rings an den Stellen, an denen die Eckstiele (vgl. Fig. 7a, Bezugszeichen 24) die Ringsteife 56 durchstoßen, entsprechende im Durchmesser kleinere Ringe 58 angeordnet sind. In Fig. 7b ist als gestrichelte Linie 57 die Schnittlinie der Mittelfläche des Kegelstumpfmantels 32 mit der Mittelfläche der Ringsteife 56 eingezeichnet.

Die Ringe 58 weisen Öffnungen 59 auf, die von den Eckstielen 24 durchstoßen werden. Hierbei umschließen die Ringe 58 die Eckstiele 24 (vgl. Fig. 7a).

Die Öffnungen 59 der Ringe 58 sind nicht formkomplementär zu den im Wesentlichen im Querschnitt rund ausgebildeten Eckstielen 24 ausgebildet, so dass an der Innenseite der Ringe 58 die Eckstiele 24 des Gitterturms nur teilweise bzw. abschnittsweise mit den Eckstielen verbunden werden. Hierbei weisen die Öffnungen 59 seitlich zu den Eckstielen nierenförmige Ausbuchtungen 55 auf, so dass in Umlaufrichtung der Ringsteife 56 die Eckstiele 24 im Bereich der Ausbuchtungen 55 nicht mit den Ringsteifen 24 verbunden sind bzw. werden.

Die Eckstiele 24 werden in radialer Richtung an der Außenseite und der Innenseite der Eckstiele 24 an den Nahtstellen 66 bzw. Schweißstellen miteinander verbunden, während die Eckstiele in Umfangsrichtung der Ringsteife 56 nicht mit den in radial umlaufender Richtung vorgesehenen Ausbuchtungen 55 verbunden sind. Dadurch werden die mechanischen Belastungen im Übergangskörper 30 an den Nahtstellen zwischen dem Kegelstumpfmantel 32 und den Eckstielen 24 weicher übertragen, wodurch eine Materialermüdung im Bereich dieser kritischen Stellen signifikant herabgesetzt bzw. verhindert wird.

Die untere Ringsteife 56 umschließt mit ihren für die Eckstiele 24 des Gitterturms vorgesehenen Ringen 58 die Eckstiele 24 des Gitterturms, wobei bei der Umschließung der Eckstiele im Bereich der an der Unterseite vorgesehenen Ringsteife (Bezugszeichen 56) die Ringsteife 56 nicht umlaufend an den Öffnungen der Ringe 50 verbunden ist. Insbesondere werden die Eckstiele 24 mit der unteren Ringsteife 56 in den radialen Quadranten der Umschließung mit den Eckstielen verbunden, während die Ringsteife 56 in den tangentialen Quadranten der Umschließung mit den Eckstielen 24 nicht verbunden ist.

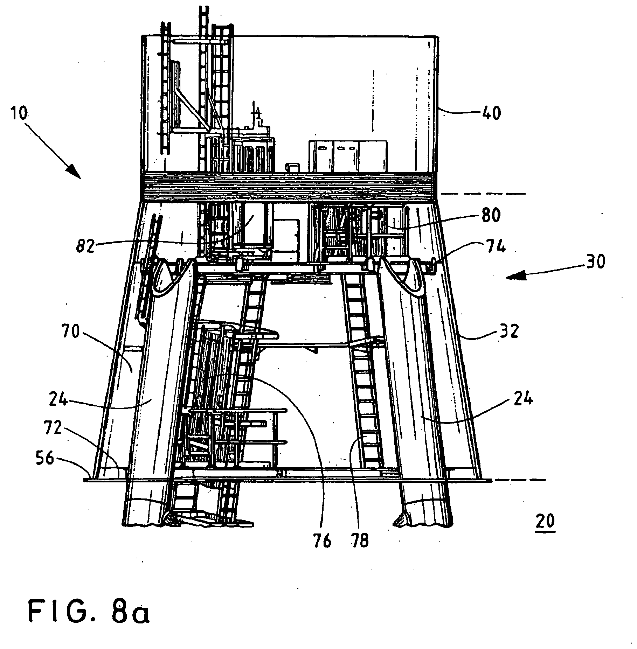

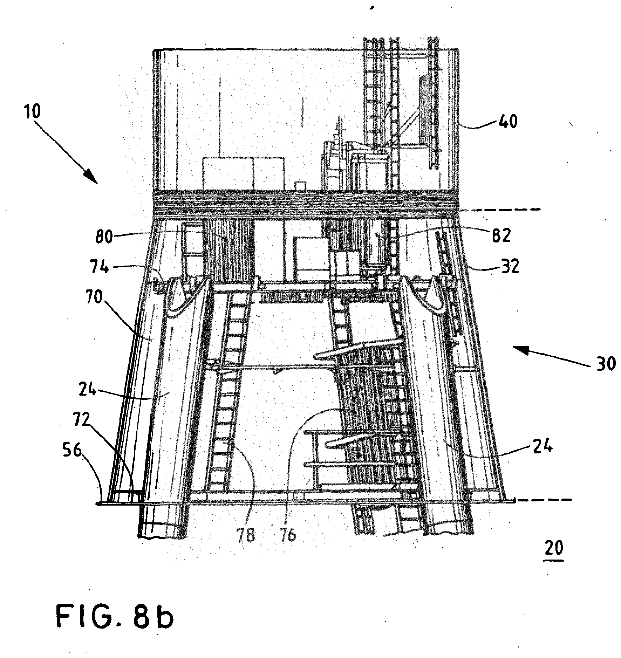

Fig. 8a und 8b zeigen eine Vorder- bzw. eine Rückansicht auf einen schematisch dargestellten Innenraum des Übergangskörpers 30 unter Weglassung des umhüllenden Kegelstumpfmantels 32. Der Innenraum 70 des Übergangskörpers 30 verfügt über eine untere Plattform 72 und eine obere Plattform 74. Die untere Plattform 72 ist als offene Plattform ausgebildet, d.h. dass die Plattform 72 nicht gegenüber Witterungseinflüssen vollkommen verschließbar bzw. abgeschlossen ist. Hierbei verfügt die untere Plattform 72 über eine oder mehrere Öffnungen, so dass beispielsweise Wartungspersonal über entsprechende Steigleitern vom Gitterturm 20 in den Innenraum 70 des Übergangskörpers 30 gelangen kann.

Darüber hinaus ist gemäß dem in Fig. 8a und 8b gezeigten Ausführungsbeispiel die untere Plattform 72 über einen verfahrbaren Fahrkorb 76 erreichbar. Hierdurch verfügt die Windkraftanlage über eine untere Befahranlage, um den Innenraum 70 des Übergangskörpers 30 zu erreichen.

In Ruhestellung befindet sich der Fahrkorb 76 im Inneren des Übergangskörpers 30, so dass der Fahrkorb 76 erst dann nach unten gefahren wird, wenn entsprechend zugangsberechtigte Personen die Windkraftanlage besichtigen bzw. warten.

Beispielsweise wird zur Durchführung einer Wartungsmaßnahme der Fahrkorb 76 nach unten an die Basis des Gitterturms 20 gefahren, so dass die Personen unten einsteigen und anschließend mit dem Fahrkorb 76 nach oben in den Innenraum 70 des Übergangskörpers 30 gelangen. Dort steigen die Personen aus dem Fahrkorb 76 aus und erreichen nach dem Aussteigen die obere Plattform 74 über eine zwischen der unteren Plattform 72 und der oberen Plattform 74 vorgesehene Leiter 78.

Mittels der oberen Plattform 74 wird ein, insbesondere geschlossener, elektrischer Betriebsraum innerhalb des Übergangskörpers 30 ausgebildet, in dem beispielsweise eine Mittelspannungsschaltanlage 80 angeordnet ist. Insgesamt wird durch die obere geschlossene Plattform 74 eine Arbeitsebene innerhalb des Übergangskörpers 30 ausgebildet, wobei es möglich ist, bestimmte Betriebseinrichtungen einer Windkraftanlage auf der oberen Plattform 74 vorzusehen.

Überdies verfügt die Windkraftanlage über eine zweite obere Befahranlage, wozu auf der oberen Plattform 74 ein zweiter Fahrkorb 82 angeordnet ist. Hierdurch kann das Wartungspersonal nach Erreichen der oberen Plattform 74 in den Fahrkorb 82 einsteigen, wodurch das Wartungspersonal zu der Gondel auf dem Rohrturm 40 gefahren wird, um dort Wartungsmaßnahmen in der Gondel oder an den Rotorblättern oder am Rotor durchzuführen.

Durch die Trennung der beiden Befahranlagen in zwei unterschiedlichen Zugangsplattformen 72, 74 wird eine besonders kompakte Ausführung des Übergangskörpers 30 ermöglicht.

Überdies ist es im Rahmen der Erfindung möglich, dass der Innenraum 70 des Übergangskörpers 30 nur über eine Plattform verfügt, über die ein Innenraum im Rohrturm 40 erreicht wird. Hierbei ist es möglich, dass Betriebseinheiten, die beispielsweise wie in Fig. 8a und 8b dargestellt, auf der zweiten oberen Plattform 74 angeordnet sind, auf einer höheren Ebene im Rohrturm 40 angeordnet sind.

### Bezugszeichenliste

- 10: Turm
- 20: Gitterturm
- 21: Strebe
- 22: Strebe
- 24: Eckstiel
- 30: Übergangskörper
- 32: Kegelstumpfmantel
- 33: Ausnehmung
- 34: Flanschring
- 35: Ausnehmung
- 36: Ausnehmung
- 37: Ausnehmung
- 38: L-Profil
- 39: T-Profil
- 40: Rohrturm
- 50: Arbeitsplattform
- 52: innere Plattform
- 54: Flanschverbindung
- 56: Ringsteife
- 57: Linie
- 58: Ring
- 59: Öffnung
- 60: Ausschnitt
- 62: Schweißverbindung
- 64: Schweißverbindung
- 65: Aussparung
- 66: Nahtstelle
- 70: Innenraum
- 72: untere Plattform
- 74: obere Plattform
- 76: Fahrkorb
- 78: Leiter
- 80: Mittelspannungsschaltanlage
- 82: Fahrkorb

## Patentansprüche

1. Turm (10) einer Windkraftanlage mit einem Unterteil (20) in Form eines Gitterturms (20) mit wenigstens drei Eckstielen (24) und einem Oberteil (40) eines, im Wesentlichen im Querschnitt runden, Rohrturms (40), wobei im Übergangsbereich der obere Anschlussbereich, insbesondere die Oberseite, des Unterteils (20) mittels eines Übergangskörpers (30) mit dem oberen Anschlussbereich, insbesondere der Unterseite, des Oberteils (40) verbunden ist, **dadurch gekennzeichnet, dass** der Übergangskörper (30) nach Art eines Kegelstumpfmantels (32) ausgebildet ist, wobei die Eckstiele (24) in den Übergangsbereich hineinragen und im Übergangsbereich zwischen dem oberen Anschlussbereich des Unterteils (20) und dem unteren Anschlussbereich des Oberteils (40) mit dem Kegelstumpfmantel (32) wenigstens abschnittsweise verbunden sind, wobei insbesondere der oder die Querschnitte der Eckstiele im Übergangsbereich abschnittsweise und/oder im Bereich der Verbindung mit dem Kegelstumpfmantel (32) im Wesentlichen unverändert sind.

2. Turm (10) gemäß dem Oberbegriff des Anspruchs 1, **dadurch gekennzeichnet, dass** der Übergangskörper (30) nach Art eines Kegelstumpfmantels (32) ausgebildet ist und auf seiner Außenseite mit einer Neigung ausgebildet ist, die der Neigung der Eckstiele (24) des Unterteils (20) entspricht, wobei insbesondere die Eckstiele (24) des Unterteils (20) mit der Unterseite des Übergangskörpers (30, 32) verbunden sind.

3. Turm (10) nach Anspruch 1, **dadurch gekennzeichnet, dass** der oder die Eckstiele (24) im Übergangsbereich durchgehend, insbesondere knickfrei, ausgebildet sind.

4. Turm (10) nach einem der Ansprüche 1 bis 3, **dadurch gekennzeichnet, dass** der Neigungswinkel wenigstens eines Eckstiels (24) oder mehrerer Eckstiele (24) dem Neigungswinkel des Kegelstumpfmantels (32) entspricht und/oder dass wenigstens ein Eckstiel (24), insbesondere an seinen Längsseiten, mit dem Kegelstumpfmantel (32) verschweißt ist oder wird.

5. Turm (10) nach einem der Ansprüche 1 bis 4, **dadurch gekennzeichnet, dass** am Kegelstumpfmantel (32) an der Außenseite eine Arbeitsplattform (50) angeordnet ist, wobei insbesondere die Arbeitsplattform (50) am Kegelstumpfmantel (32) im unteren Bereich und/oder im Übergang zum Unterteil (20), vorzugsweise umlaufend, ausgebildet ist.

6. Turm (10) nach einem der Ansprüche 1 bis 5, **dadurch gekennzeichnet, dass** der Innenraum des Kegelstumpfmantels (32), insbesondere mittels wenigstens einer inneren Plattform (52), wenigstens teilweise abgeschlossen ist und/oder dass im Innenraum (70) des Kegelstumpfmantels (32) eine oder mehrere Plattformen (72, 74) angeordnet sind.

7. Turm (10) nach Anspruch 6, **dadurch gekennzeichnet, dass** mittels einer oberen Plattform (74) im Innenraum (70) des Kegelstumpfmantels (32) ein oberer, insbesondere abgeschlossener, Raum, vorzugsweise Arbeitsraum, ausgebildet ist, wobei insbesondere im oberen Raum des Innenraums (70) des Kegelstumpfmantels (32) eine, insbesondere obere, Befahranlage vorgesehen ist oder aufgenommen wird oder ist, so dass das Oberteil (40) der Windkraftanlage mittels der Befahranlage vom Übergangskörper (30) befahrbar bzw. erreichbar ist und/oder wobei insbesondere im oberen Raum des Innenraums (70) des Kegelstumpfmantels (32) eine Betriebseinrichtung (82) der Windkraftanlage, vorzugsweise Spannungsschaltanlage, insbesondere Mittelspannungsschaltanlage (82), vorgesehen ist.

8. Turm (10) nach Anspruch 6 oder 7, **dadurch gekennzeichnet, dass** mittels einer unteren Plattform (72) im Innenraum (70) des Kegelstumpfmantels (32) ein unterer, insbesondere offener, Raum, vorzugsweise Arbeitsraum, ausgebildet ist, wobei insbesondere im unteren Raum des Innenraums (70) des Kegelstumpfmantels (32) eine, insbesondere untere, Befahranlage aufgenommen ist oder wird, so dass der Übergangskörper (30) der Windkraftanlage mittels der Befahranlage vom Unterteil (20), insbesondere Gitterturm (20), befahrbar bzw. erreichbar ist.

9. Turm (10) nach einem der Ansprüche 1 bis 8, **dadurch gekennzeichnet, dass** im Innenraum (70) des Kegelstumpfmantels (32) eine untere Befahranlage und eine obere Befahranlage aufgenommen sind oder werden, wobei insbesondere die untere Befahranlage in Ruhestellung im Innenraum des Kegelstumpfmantels (32) bzw. im Übergangskörper (30) angeordnet ist oder wird.

10. Turm (10) nach einem der Ansprüche 1 bis 9, **dadurch gekennzeichnet, dass** der Kegelstumpfmantel (32) im unteren Bereich und/oder im oberen Bereich mit einem T-Profil (39) oder einem L-Profil (38) ausgebildet ist und/oder dass die Eckstiele (24) über eine Länge von mehr als zwei Durchmessern des Eckstiels (24) mit dem Kegelstumpfmantel (32) verbunden sind und/oder dass der Kegelstumpfmantel (32) wenigstens eine Ausnehmung (33, 35, 36, 37), insbesondere zwischen zwei Eckstielen (24), und/oder eine Zugangsöffnung (33) aufweist und/oder dass eine oder mehrere Eckstiele (24) im Übergangsbereich kontinuierlich verlaufend in Längsrichtung und/oder in Umfangsrichtung ausgebildet sind und/oder mit dem Kegelstumpfmantel (32) verschweißt sind oder werden und/oder dass die Eckstiele (24) als Hohlprofile, insbesondere Rohre, vorzugsweise aus Stahl, ausgebildet sind oder aus standardisierten Rohrprofilen gebildet sind oder werden.

11. Turm (10) nach einem der Ansprüche 1 bis 10, **dadurch gekennzeichnet, dass** der Kegelstumpfmantel (32) wenigstens eine Ringsteife oder mehrere Ringsteife, vorzugsweise am unteren und/oder oberen Ende, aufweist, wobei insbesondere eine im unteren Bereich des Kegelstumpfmantels (32) vorgesehene Ringsteife (56) einen oder mehrere Eckstiele (24) wenigstens teilweise oder vollständig umschließt und/oder wobei insbesondere die Ringsteife (56) mit einem oder mehreren Eckstielen (24) teilweise verbunden ist, so dass insbesondere die Verbindung von Ringsteife (56) mit einem Eckstiel (24) diskontinuierlich ausgebildet ist.

12. Turm (10) nach Anspruch 11, **dadurch gekennzeichnet, dass** zwischen der Ringsteife (56) und dem in einer Öffnung (59) der Ringsteife (56) durchstoßenden Eckstiel (24) eine oder mehrere, insbesondere nierenförmige, Aussparungen (55) vorgesehen sind und/oder dass die Ringsteife mit einem oder mehreren Eckstielen in Umfangsrichtung des Kegelstumpfmantels, nicht verbunden ist und/oder dass die Ringsteife (56) mit einem oder mehreren Eckstielen (24) quer, insbesondere senkrecht, zur Umfangsrichtung des Kegelstumpfmantels (32), verbunden ist und/oder dass der Kegelstumpfmantel (32) im Bereich der Ringsteife (56) eine oder mehrere, vorzugsweise tropfenförmige oder nasenförmige, Aussparungen (65) aufweist und/oder dass die Ringsteifen als L-Profil oder als T-Profil ausgebildet sind.

13. Turm (10) nach einem der Ansprüche 1 bis 12, **dadurch gekennzeichnet, dass** am unteren Ende des Kegelstumpfmantels (32) ein oder mehrere Ringsteifen, insbesondere mit einem T-Profil oder einem L-Profil, zwischen den Eckstielen (24) angeordnet oder angeschweißt sind und/oder dass der Übergangskörper unterhalb der Rotorblattspitzen angeordnet ist und/oder dass der Rohrturm des Oberteils mindestens 1/6 der gesamten Turmhöhe bildet.

14. Windkraftanlage mit einem Turm (10) nach einem der Ansprüche 1 bis 13.

15. Verwendung eines Übergangskörpers (30) in einem Turm (10) einer Windenergieanlage nach einem der Ansprüche 1 bis 13.

## Claims

1. A tower (10) of a wind turbine with a lower portion (20) in the form of a lattice tower (20) with at least three corner legs (24) and an upper portion (40) of a tubular tower (40), which is of substantially round cross section, wherein in the transition region the upper connecting region, particularly upper side, of the lower portion (20) is connected by means of a transition body (30) to the upper connecting region, particularly the lower side, of the upper portion (40), **characterised in that** the transition body (30) is constructed in the manner of a frusto-conical shell (32), wherein the corner legs (24) project into the transition region and are connected, at least in sections, to the frusto-conical shell in the transition region between the upper connecting region of the lower portion (20) and the lower connecting region of the upper portion (40), wherein, in particular, the cross section or cross sections of the corner legs in the transition region are substantially unaltered in sections and/or in the region of the connection with the frusto-conical shell (32).

2. A tower (10) as claimed in the preamble of claim 1, **characterised in that** the transition body (30) is constructed in the manner of a frusto-conical shell (32) and is constructed with an inclination on its outer surface, which corresponds to the inclination of the corner legs (24) of the lower portion (20), wherein, in particular, the corner legs (24) of the lower portion (20) are connected to the lower side of the transition body (30, 32).

3. A tower (10) as claimed in claim 1, **characterised in that** the corner leg or legs (24) are of continuous construction in the transition region, particularly without bends.

4. A tower (10) as claimed in one of claims 1 to 3, **characterised in that** the angle of inclination of at least one corner leg (24) or a plurality of corner legs (24) corresponds to the angle of inclination of the frusto-conical shell (32) and/or that at least one corner leg (24) is welded to the frusto-conical shell (32), particularly on its longitudinal sides.

5. A tower (10) as claimed in one of claims 1 to 4, **characterised in that** arranged on the outer surface of the frusto-conical shell (32) there is a working platform (50), wherein, in particular, the working platform (50) is constructed on the frusto-conical shell (32) in its lower region and/or in the transition to the lower portion (20) preferably circumferentially.

6. A tower (10) as claimed in one of claims 1 to 5, **characterised in that** the interior of the frusto-conical shell (32) is at least partially closed, particularly by means of at least one inner platform (52), and/or that one or more platforms (72, 74) are arranged in the interior (70) of the frusto-conical shell (32).

7. A tower (10) as claimed in claim 6, **characterised in that** the an upper, particularly closed, space is defined in the interior (70) of the frusto-conical shell (32) by means of an upper platform (74), wherein, in particular, a, particularly upper, service lift is provided or accommodated in the upper space of the interior (70) of the frusto-conical shell (32) so that the upper portion (40) of the wind turbine is accessible or reachable by means of the service lift from the transition body (30) and/or wherein, in particular, an operational device (82) of the wind turbine, particularly a voltage switching device, particularly a medium voltage switching device (82) is provided in the upper space of the interior (70) of the frusto-conical shell (32) .

8. A tower (10) as claimed in claim 6 or 7, **characterised in that** a lower, particularly open, space, preferably a working space, is defined in the interior (70) of the frusto-conical shell (32) by means of a lower platform (72), wherein, in particular, accommodated in the lower space of the interior (70) of the frusto-conical shell (32) there is a, particularly lower, service lift so that the transition body (30) of the wind turbine is accessible or reachable from the lower portion (20), particularly the lattice tower (20), by means of the service lift.

9. A tower (10) as claimed in one of claims 1 to 8, **characterised in that** accommodated in the interior (70) of the frusto-conical shell (32) there are a lower service and an upper service lift, wherein, in particular, the lower service lift is disposed, in the rest position, in the interior of the frusto conical shell (32) or in the transition body (30).

10. A tower (10) as claimed in one of claims 1 to 9, **characterised in that** the frusto-conical shell (32) is constructed in the lower region and/or in the upper region with a T-Profile (39) or an L-Profile (38) and/or that the corner legs (24) are connected to the frusto-conical shell (32) over a length of more than two diameters of the corner leg (24) and/or that the frusto-conical shell (32) has at least one opening (33, 35, 36, 37) particularly between two corner legs (24), and/or an access opening (33) and/or that one or more corner legs (24) are constructed to extend continuously in the longitudinal direction and/or in the circumferential direction in the transition region and/or are welded to the frusto-conical shell (32) and/or that the corner legs (24) are constructed in the form of hollow profiles, particularly tubes, preferably of steel, or are constituted by standardised tube profiles.

11. A tower (10) as claimed in one of claims 1 to 10, **characterised in that** the frust-conical shell (32) has an at least one annular stiffening member or a plurality of stiffening members, preferably at the lower and/or upper end, wherein, in particular, an annular stiffening member (56) provided in the lower region of a frusto-conical shell (32) at least partially or completely surrounds one or more corner legs (24) and/or wherein, in particular, the annular stiffening member (56) is partially connected to one or more corner legs (24) so that, in particular, the connection of the annular stiffening member (56) to the corner leg (24) is discontinuous.

12. A tower (10) as claimed in claim 11, **characterised in that** one or more, particularly kidney shaped, openings (55) are provided between the annular stiffening member (56) and the corner leg (24) passing into an opening (59) in the annular stiffening member (56) and/or the annular stiffening member is not connected to one or more corner legs in the peripheral direction of the frusto-conical shell and/or that the annular stiffening member (56) is connected to one or more corner legs (24) transversely, particularly perpendicularly, to the circumferential direction of the frusto-conical shell (32) and/or that the frusto-conical shell (32) has one or more, preferably drop-shaped or nose-shaped openings (65) in the vicinity of the annular stiffening member (56) and/or that the annular stiffening members are constructed as L-Profiles or as T-Profiles.

13. A tower (10) as claimed in one of claims 1 to 12, **characterised in that** arranged on or welded to the lower end of the frusto-conical shell (32) between the corner legs (24) there are one or more annular stiffening members, particularly with a T-Profile or an L-Profile, and/or that the transition body is arranged below the rotor blade tips and/or that the tubular tower of the upper portion constitutes at least 1/6 of the total height of the tower.

14. A wind turbine with a tower (10) as claimed in one of claims 1 to 13.

15. Use of a transition body (30) in a tower (10) of a wind turbine as claimed in one of claims 1 to 13.

## Revendications

1. Tour (10) d'une éolienne comprenant une partie inférieure (20) sous la forme d'une tour en treillis (20) avec au moins trois poteaux d'angle (24) et une partie supérieure (40) sous la forme d'une section transversale sensiblement ronde, une tour tubulaire (40), dans laquelle, dans la région de transition de la zone de liaison supérieure, en particulier la partie supérieure, la partie inférieure (20) est reliée à la zone de liaison supérieur au moyen d'un organe de transition (30), en particulier avec la partie inférieure de la partie supérieure (40), **caractérisée en ce que** l'organe de transition (30) est formé à la manière d'un cône tronqué (32), dans lequel les poteaux d'angle (24) sont au moins partiellement reliés au cône tronqué (32) dans la région de transition et d'intrusions dans la zone de transition entre la partie de raccordement supérieure de la base (20) et la zone de raccordement inférieure de la partie supérieure (40), en particulier la ou les sections transversales des poteaux d'angle dans la zone de transition dans les sections et / ou la connexion au cône tronqué (32) sont essentiellement les mêmes.

2. Tour (10) selon le préambule de la revendication 1, **caractérisée en ce que** l'organe de transition (30) est formé à la manière d'un cône tronqué (32) et est formé sur son côté extérieur avec une inclinaison correspondant à l'inclinaison des poteaux d'angle (24) de la base (20), en particulier des poteaux d'angle (24), la partie inférieure (20) étant reliée avec la face inférieure de l'organe de transition (30, 32).

3. Tour (10) selon la revendication 1, **caractérisée en ce que** le ou les poteaux d'angle (24) dans la zone de transition sont formés de manière continue, en particulier sans être pliés.

4. Tour (10) selon l'une quelconque des revendications 1 à 3, **caractérisée en ce que** l'angle d'inclinaison d'au moins un poteau d'angle (24) ou d'une pluralité de poteaux d'angle (24) correspond à l'angle d'inclinaison du cône tronqué (32) et / ou qu'au moins un poteau d'angle (24), en particulier, sur ses côtés longitudinaux, est soudé à l'enveloppe du cône tronqué (32).

5. Tour (10) selon l'une quelconque des revendications 1 à 4, **caractérisée en ce que** le cône tronqué (32) est disposé sur le côté extérieur d'une plate-forme de travail (50), en particulier, la plate-forme de travail (50) sur le cône tronqué (32) dans la zone inférieure et / ou dans la zone transition de la partie inférieure (20) étant de préférence formée de manière circonférentielle.

6. Tour (10) selon l'une quelconque des revendications 1 à 5, **caractérisée en ce que** l'intérieur du cône tronqué (32), en particulier au moyen d'au moins une plate-forme intérieure (52), est au moins partiellement fermé et / ou qu'une ou plusieurs plates-formes (72, 74) sont disposées dans l'espace intérieur (70) du cône tronqué (32).

7. Tour (10) selon la revendication 6, **caractérisée en ce qu'**au moyen d'une plate-forme supérieure (74) dans l'espace intérieur (70) du cône tronqué (32), un espace, en particulier un espace fermé, de préférence la chambre de travail, est formé, en particulier dans l'espace supérieur intérieur (70) du cône tronqué (32) un accès est fourni, en particulier un dispositif d'accès supérieur, de sorte que la partie supérieure (40) de l'éolienne par le biais de l'ascenseur de service de l'organe de transition (30) est praticable et accessible et / ou dans laquelle, en particulier dans l'espace supérieur de l'espace intérieur (70) du cône tronqué (32), un dispositif d'actionnement (82) de l'éolienne est prévu, le dispositif étant de préférence un appareil de distribution électrique à moyenne tension (82).

8. Tour (10) selon la revendication 6 ou la revendication 7, **caractérisée en ce qu'**au moyen d'une plate-forme inférieure (72) située dans l'espace intérieur (70) du cône tronqué (32), la partie inférieure, et notamment son ouverture, forme un espace, de préférence, forme une chambre de travail, en particulier, dans la chambre inférieure de l'espace intérieur (70) du cône tronqué (32), en particulier dans la partie inférieure, un ascenseur de service est reçu, de sorte que l'organe de transition (30) de l'éolienne au moyen de l'ascenseur de service, à partir de la partie inférieure (20), en particulier de la tour en treillis (20), est suffisamment grand ou est accessible.

9. Tour (10) selon l'une quelconque des revendications 1 à 8, **caractérisée en ce qu'**un système d'accès inférieur, et un système d'accès supérieur sont logés dans l'espace intérieur (70) du tronc de cône (32), dans laquelle en particulier, le système d'accès inférieur, dans une position de repos, est situé à l'intérieur du cône tronqué (32) et est disposé dans l'organe de transition (30).

10. Tour (10) selon l'une quelconque des revendications 1 à 9, **caractérisée en ce que** le cône tronqué (32) dans la zone inférieure et / ou dans la partie supérieure est formé avec une forme en T (39) ou une forme en L (38) et / ou **en ce que** les poteaux d'angle (24) sur une longueur de plus de deux diamètres d'un poteaux d'angle (24) sont reliés au cône tronqué (32) et / ou **en ce que** le cône tronqué (32) comprend au moins un évidement (33, 35, 36, 37), en particulier entre deux poteaux d'angle (24) et / ou comprend une ouverture d'accès (33) et / ou qu'un ou plusieurs poteaux d'angle (24) sont formés en continu et s'étendent dans la zone de transition dans la direction longitudinale et / ou dans la direction circonférentielle et / ou sont soudés avec le cône tronqué (32) et / ou que les poteaux d'angle (24) sont creux, en particulier sont des tuyaux de préférence en acier, sont formés à partir de sections tubulaires standard.

11. Tour (10) selon l'une quelconque des revendications 1 à 10, **caractérisée en ce que** le cône tronqué (32) comprend au moins un raidisseur annulaire ou plusieurs raidisseurs annulaires, de préférence l'extrémité supérieure et / ou inférieure a, en particulier, une zone inférieure du cône tronqué (32) prévue pour le raidisseur annulaire (56) et un ou plusieurs poteaux d'angle (24) l'entoure au moins partiellement ou complètement et / ou dans laquelle en particulier le raidisseur annulaire (56) comprend un ou plusieurs poteaux d'angle (24) et est partiellement connecté, notamment de sorte que le raccordement du raidisseur annulaire (56) avec un poteau d'angle (24) soit discontinu.

12. Tour (10) selon la revendication 11, **caractérisée en ce qu'**entre le raidisseur annulaire (56) et l'ouverture (59) du raidisseur annulaire (56) venant en butée contre le poteau d'angle (24) un ou plusieurs évidements (55) sont prévus, en particulier, des évidements en forme de rein (55) et / ou **en ce que** le raidisseur annulaire et / ou que le raidisseur annulaire est relié à un ou plusieurs poteaux d'angle dans le sens de la circonférence du cône tronqué, et / ou que le raidisseur annulaire (56), transversalement, en particulier perpendiculairement, à la direction de la circonférence du cône tronqué (32), est relié à un ou à une pluralité de poteaux d'angle (24) et / ou **en ce que** le cône tronqué (32), dans la zone du raidisseur annulaire (56), présente un ou plusieurs évidements (65), de préférence en forme de goutte ou en forme de nez, et / ou que les raidisseurs annulaires sont réalisés sous la forme d'un L ou en forme de T.

13. Tour agencé (10) selon l'une quelconque des revendications 1 à 12, **caractérisée en ce qu'**à l'extrémité inférieure de la surface du cône tronqué (32), un ou plusieurs raidisseurs annulaires, en particulier ayant une forme en T ou une forme en L, sont soudés entre les poteaux d'angle (24) et / ou que l'organe de transition est disposé au-dessous de l'extrémité des pales de rotor et / ou **en ce que** la tour tubulaire de la partie supérieure constitue au moins 1/6 de la hauteur totale de la tour.

14. Eolienne avec un pylône (10) selon l'une quelconque des revendications 1 à 13.

15. Utilisation d'un organe de transition (30) dans une tour (10) d'une éolienne selon l'une quelconque des revendications 1 à 13.
